# EUROPEAN PATENT SPECIFICATION

(11) **EP 2 104 317 B1**
(45) Date of publication and mention of the grant of the patent: **27.01.2016**
(21) Application number: 09250456.2
(22) Date of filing: 20.02.2009
(51) Int. Cl.: H04L 29/12, H04L 29/08, H04L 12/28

(54) **Information processing unit, information playback unit, information processing method, information playback method, information processing system and program**
Informationsverarbeitungseinheit, Informationswiedergabeeinheit, Informationsverarbeitungsverfahren, Informationswiedergabeverfahren, Informationsverarbeitungssystem und -programm
Unité de traitement d'informations, unité de lecture d'informations, procédé de traitement d'informations, procédé de lecture d'informations, système de traitement d'informations et programme

(30) Priority: 19.03.2008 JP 2008072373
(43) Date of publication of application: 23.09.2009
(73) Proprietor: Sony Corporation, Tokyo (JP)
(72) Inventor: Kikkawa, Norifumi, Tokyo (JP)
(74) Representative: D Young & Co LLP

(56) References cited:
- US-A1- 2005 138 193
- US-A1- 2007 094 691
- US-A1- 2007 211 632

## Description

The present invention relates to an information processing unit, an information playback unit, an information processing method, an information playback method and a program.

The recent development of information communications technology has enabled remote access between a client and a server through the Internet. It is, however, not preferable in terms of security to randomly accept an access request from the outside (i.e. the outside of a LAN).

In view of this, a technique of placing a proxy server that accepts access requests from the outside of a LAN and accepting only the access request from the external device that is registered with the proxy server beforehand has been proposed (cf. e.g. Japanese Patent Application Publication No. 2006-165867).

In a 3-box model composed of three kinds of devices: a controller, a renderer and a server, conforming to the digital living network alliance (DLNA) guideline, there is a case where the controller controls communications so that the renderer acquires content from the server and plays it back. In such a case, it is sometimes necessary for the renderer to make remote access to the server. However, because access from an unregistered external device (i.e. the renderer) is not accepted when using the proxy server disclosed in Japanese Patent Application Publication No. 2006-165867, the flexibility of the system is degraded. Further, even when the external device is registered with the proxy server, because it is necessary for the proxy server to administer the remote access between the external device and a device connected to the proxy server, heavy loads are placed on the proxy server.

Prior art systems having the pre-characterising features of claim 1 appended hereto are described in US 2007/0094691 A and US 2007/0211632 A.

In light of the foregoing, it is desirable to provide a novel and improved information processing unit, information playback unit, information processing method, information playback method and program capable of easily establishing a remote access connection between a device inside a LAN and a device outside the LAN.

According to an embodiment of the present invention, there is provided an information processing unit according to claim 1 appended hereto.

According to another embodiment of the present invention, there is provided an information playback unit according to claim 2 appended hereto.

The location information determination section may further determine whether the location information is location information explicitly specifying a remote access connection, and if the location information is location information explicitly specifying a remote access connection, the location information conversion section may refrain from converting the location information.

According to other embodiments of the present invention, there is provided an information processing method according to claim 4 and 5.

According to another embodiment of the present invention, there is provided an information processing system including at least one of the above-described information processing unit and the above-described information playback unit.

According to the embodiments of the present invention described above, it is possible to easily establish a remote access connection between a device inside a LAN and a device outside the LAN.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is an explanatory view illustrating an information processing system according to a first embodiment of the present invention.
FIG. 2 is an explanatory view illustrating an example of an information processing system according to the embodiment.
FIG. 3 is a block diagram illustrating the configuration of an information processing unit according to the embodiment.
FIG. 4 is a block diagram illustrating the configuration of an information playback unit according to the embodiment.
FIG. 5 is an explanatory view illustrating location information according to the embodiment.
FIG. 6 is a flowchart illustrating a method of converting location information according to the embodiment.
FIG. 7 is a block diagram illustrating a first alternative example of an information playback unit according to the embodiment.
FIG. 8 is a flowchart illustrating an information playback method according to the embodiment.
FIG. 9 is a flowchart illustrating a specific example of an information processing method according to the embodiment.
FIG. 10 is a flowchart illustrating a specific example of an information processing method according to the embodiment.
FIG. 11 is a flowchart illustrating a specific example of an information processing method according to the embodiment.
FIG. 12 is a flowchart illustrating a specific example of an information processing method according to the embodiment.
FIG. 13 is an explanatory view illustrating an application of location information according to the embodiment.
FIG. 14 is a block diagram illustrating the hardware configuration of an information processing unit according to the embodiment.
FIG. 15 is an explanatory view illustrating a method of implementing remote access according to a related art.
FIG. 16 is an explanatory view illustrating a method of implementing remote access according to a related art.
FIG. 17 is an explanatory view illustrating a method of implementing remote access according to a related art.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### (First embodiment)

### <Information processing system>

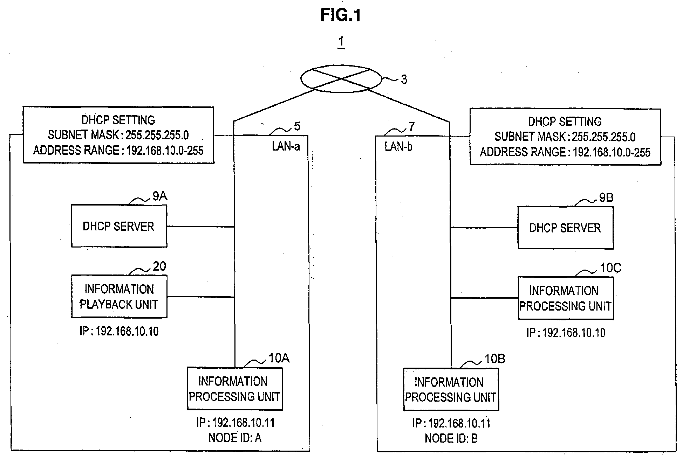

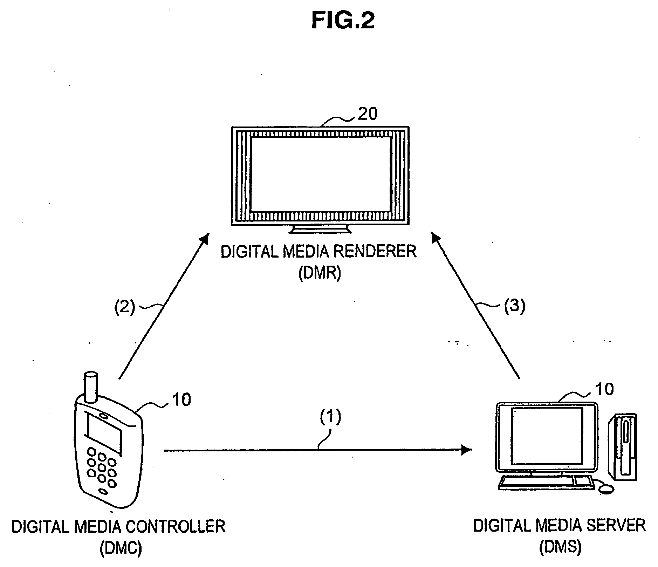

An information processing system according to a first embodiment of the present invention is described hereinafter in detail with reference to FIGS. 1 and 2.

An information processing system 1 according to the embodiment includes a LAN-a 5, a LAN-b 7 and the Internet 3 as shown in FIG. 1, for example. The LAN-a 5 and the LAN-b 7 are LANs on different subnets.

A DHCP server 9A, an information processing unit 10A and an information playback unit 20 belong to the LAN-a 5. An IP address using a private IP address is assigned to each of the information processing unit 10A and the information playback unit 20 by the DHCP server 9A. On the other hand, a DHCP server 9B and information processing units 10B and 10C belong to the LAN-b 7. An IP address using a private IP address is assigned to each of the information processing units 10B and 10C by the DHCP server 9B.

One example of the information processing system 1 is a 3-box model conforming to the digital living network alliance (DLNA) guideline. The 3-box model conforming to the DLNA guideline is a use case that is implemented by a digital media controller (DMC), a digital media server (DMS) and a digital media renderer (DMR) as shown in FIG. 2, for example.

The DMC and the DMS are examples of the information processing unit 10 according to the embodiment, and the DMR is an example of the information playback unit 20 according to the embodiment.

The DMC includes a user interface (UI) so as to display a server list that lists DMSs to which the DMC is connectable, a content list that lists contents included in the DMS and so on. The DMC also includes a user interface for a user to select content. The DMC further includes a user interface so as to display a renderer list that lists DMRs to which the DMC is connectable, for a user to select a DMR to display content.

The DMS manages various kinds of contents, which are held in the DMS and nodes connected to the DMS. The DMS further includes a content list that lists the contents managed by the DMS.

The DMR includes a content display unit that acquires content from the DMS based on location information of the DMS that is specified by the DMC and plays back the acquired content.

The DMC selects the DMS and acquires the content list of contents that are managed by the DMS using "CDS::Browse" action (1). The "CDS::Browse" action is one of control instructions that are specified by the DLNA guideline. A user selects content to be played back from the content list that is displayed on the DMC. At this time, the DMC acquires a uniform resource locator (URL), which is the location information of the content, from the DMS.

The user then selects a DMR to display the content by referring to the renderer list. The DMC sets the URL of the content selected by the user to the selected DMR by "AVT::SetAVTransportURI" action (2). After that, the DMC requests the DMR to start playback of the content (2) by "AVT::Play" action.

The DMR acquires the content at the URL that is specified by the DMC from the DMS (3) and plays back the acquired content.

The "AVT::SetAVTransportURI" action and the "AVT::Play" action are one of control instructions that are specified by the DLNA guideline.

Consider, for example, the case where the DMC and the DMR belong to the same LAN and the DMS belongs to a different LAN for which remote access is necessary. When implementing the use case of the 3-box model conforming to the DLNA guideline in this circumstance, there is an issue that the DMC is unable to appropriately set the URL of the content to the DMR. If the URL transmitted from the DMS is set to the DMR as it is, the DMR attempts to resolve the URL without using remote access, which results in failure to access the content designated by the DMC.

### <Method of implementing remote access in related art>

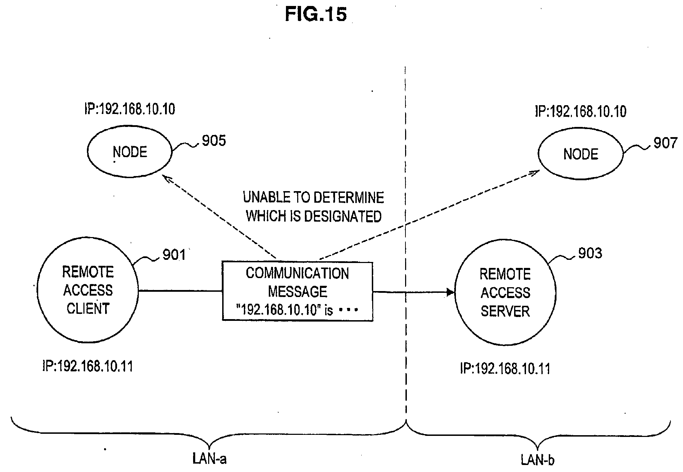

A method of implementing remote access according to related arts is described hereinafter in detail with reference to FIGS. 15 to 17. FIGS. 15 to 17 are explanatory views illustrating a method of implementing remote access according to related arts.

In order to address the above-described issue, the inventor of the present invention has conducted studies about a method of implementing remote access according to related arts firstly.

Consider the case of performing remote access between a client and a server through the Internet as shown in FIG. 15. A remote access client 901 and a remote access server 903 respectively belong to a LAN-a and a LAN-b, which are LANs on different subnets. Further, an IP address using a private IP address is assigned to each device belonging to the LAN by a DHCP server (not shown).

Regarding an application that operates on the network in which the two LANs using the private IP address are connected by remote access as shown in FIG. 15, it is necessary to take the case where the private IP address in the same address range is used in the two LANs into account. If no measures are taken, when the IP address is described in information contained in the application, it is unable to determine for which LAN the IP address is.

Specifically, if the private address "192.168.10.10", for example, is described in a communication message that is transmitted from the remote access client 901 to the remote access server 903, the remote access server 903 that receives the communication message is unable to determine which of a node 905 in the LAN-a to which the IP address "192.168.10.10" is assigned and a node 907 in the LAN-b to which the IP address "192.168.10.10" is assigned is designated.

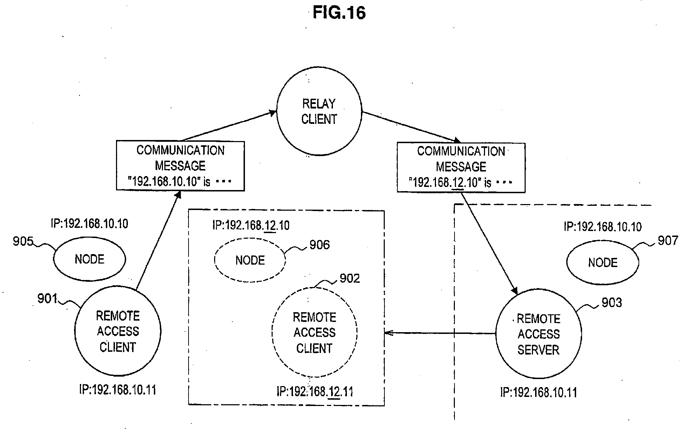

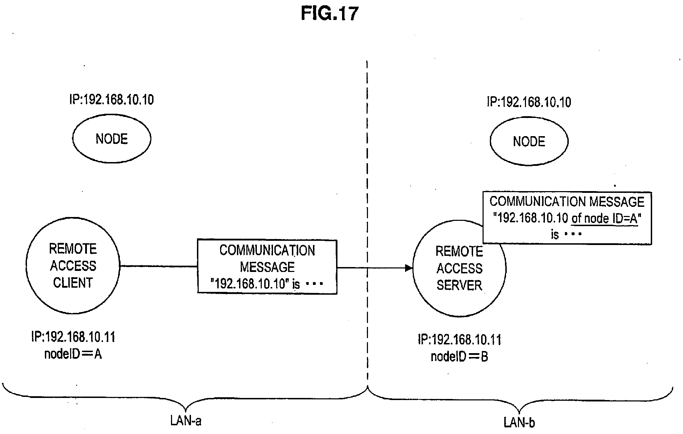

As an approach to address such a circumstance, two techniques are used according to related arts: a technique of performing address conversion as shown in FIG. 16, for example, and a technique of performing IP address discrimination as shown in FIG. 17, for example.

Referring first to FIG. 16, the technique of performing address conversion is described hereinafter in detail. A relay node 909 that administers communication between the remote access client 901 and the remote access server 903 exchanges information about the IP address range of the LAN beforehand with a remote access node of the other end of communication (i.e. the remote access server 903). If there is a collision in the IP address range between the LAN to which the remote access client 901 belongs and the LAN to which the remote access server 903 belongs, the relay node 909 converts the IP address information contained in the data to be transferred to the remote access server 903 so that it is recognized as a different IP address through the remote access. Specifically, the relay node 909 checks the transmission data and, if the portion corresponding to the IP address is in the collided range, it rewrites the data before transmission. For example, in the case shown in FIG. 16, the relay node 909 converts the IP address "192.168.10.10" that is contained in the communication message into "192.168.12.10" so as to avoid a collision in the IP address.

Further, when data is transmitted from the remote access server 903 to the remote access client 901, the relay node 909 checks the data transmitted from the remote access server 903 and, if the portion corresponding to the IP address is in the rewritten range, it writes it back to the original address.

However, in order to perform conversion of an IP address, it is necessary to know in which portion of the communication data the IP address information is contained. Therefore, it is necessary for the relay node 909 to understand the format of the transmission data, which is, an application protocol. In the case of operating a plurality of applications, it is necessary for the relay node 909 to understand all of them, which increases the loads on the relay node 909. Further, because it is unable to perform conversion of an IP address for an application that is not supported by the relay node 909, IP address conversion is not operated.

Referring next to FIG. 17, the technique of performing IP address discrimination is described hereinafter. This technique distinguishes between an IP address obtained by remote access and an IP address obtained by a normal method in an application layer (e.g. an application layer in the open system interconnection (OSI) reference model or an application layer in the TCP/IP four-layer model). For example, it is assumed in this technique that "an IP address obtained through remote access is an IP address that can be resolved by a remote access node of the other end of communication without exception". In the application, the IP address information is managed in association with a node ID (identifier) of the remote access node from which the information is obtained, thereby allowing identification.

In the case shown in FIG. 17, for example, the IP address "192.168.10.10" contained in the communication message that is transmitted from the remote access client 901 with the node ID "A" is distinguished as being "192.168.10.10 of node ID=A" in the remote access server 903. Therefore, even if the nodes to which the same private IP address is assigned exist in both of the LAN-a and the LAN-b, it is possible to distinguish between the node 905 belonging to the LAN-a and the node 907 belonging to the LAN-b.

In this technique, although it is necessary to make modification for managing the node ID to each application, the remote access nodes of the remote access client 901, the remote access server 903 and so on are not dependent on the upper layer protocol.

The information processing unit 10 and the information playback unit 20 according to the embodiment are applied to the remote access scheme that performs the above-described IP address discrimination.

### <Configuration of the information processing unit 10>

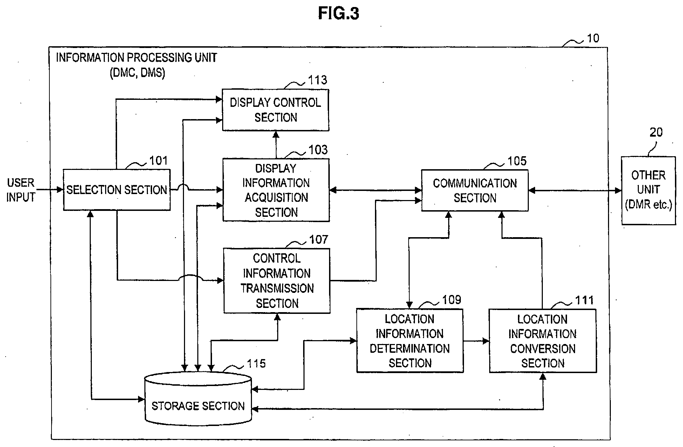

The configuration of the information processing unit 10 according to the embodiment is described hereinafter in detail with reference to FIG. 3. FIG. 3 is a block diagram illustrating the configuration of the information processing unit 10 according to the embodiment.

The information processing unit 10 according to the embodiment mainly includes a selection section 101, a display information acquisition section 103, a communication section 105, a control information transmission section 107, a location information determination section 109, a location information conversion section 111, a display control section 113 and a storage section 115 as shown in FIG. 3, for example.

The selection section 101 is composed of a central processing unit (CPU), read only memory (ROM), random access memory (RAM) and so on, for example. If a user interface that is displayed on a display section (not shown) of the information processing unit 10 is selected by a user, the selection section 101 generates control information according to the selection of the user. Examples of the control information are "CDS::Browse" action, "AVT::SetAVTransportURI" action and "AVT::Play" action according to the DLNA guideline. Upon generation of the control information, the selection section 101 can refer to various kinds of databases or the like recorded in the storage section 115, which is described later.

The selection section 101 notifies what is selected by a user to the display control section 113 so that it is displayed on the display section (not shown). Further, the control information generated by the selection section 101 are transferred to the display information acquisition section 103 and the control information transmission section 107.

The display information acquisition section 103 is composed of a CPU, ROM, RAM and so on, for example. If the control information is transmitted from the selection section 101 so as to display the information acquired from another unit (e.g. a DMS or a DMR conforming to the DLNA guideline), the display information acquisition section 103 acquires the relevant information from the unit via the communication section 105, which is described later. For example, in the case where the information processing unit 10 according to the embodiment is a DMC conforming to the DLNA guideline, if the control information indicating "acquisition of a list from a DMS or a DMR" is transmitted from the selection section 101, the display information acquisition section 103 provides "CDS::Browse" action to the DMS or the DMR via the communication section 105 and acquires the specified list from the DMS or the DMR.

The acquired information is supplied to the display control section 113, which is described later, and displayed on the display section (not shown) by the display control section 113.

Upon acquisition of the information, the display information acquisition section 103 can refer to various kinds of databases that are recorded in the storage section 115, which is described later, or the like. Further, the display information acquisition section 103 can record the acquired information into the storage section 115, which is described later.

The communication section 105 is composed of a CPU, ROM, RAM, a communication unit and so on, for example. The communication section 105 establishes a connection between the information processing unit 10 according to the embodiment and another unit such as a further information processing unit or the information playback unit 20 and performs data transmission and reception with the other unit. When a connection is established with the other unit, for example, the communication section 105 acquires information about the LAN to which the other unit belongs (e.g. information about a node ID and an IP address range and information about another node belonging to the LAN) from the other unit and outputs the acquired information to the location information determination section 109 and the location information conversion section 111, which are described later.

If a request for transmitting information is made from the display information acquisition section 103 or the control information transmission section 107, which is described later, the communication section 105 first outputs location information that is contained in the transmission data to be transmitted to the location information determination section 109, which is described later.

If a determination result indicating that the location information contained in the transmission data to be transmitted is entirely associated with a unit existing inside the LAN to which the information processing unit 10 according to the embodiment belongs is supplied from the location information determination section 109, which is described later, the communication section 105 transmits the location information contained in the transmission data to be transmitted without any change.

If, on the other hand, new location information is supplied from the location information conversion section 111, which is described later, the communication section 105 converts the location information contained in the transmission data to be transmitted into the location information supplied from the location information conversion section 111 and transmits the converted location information.

The location information contained in the above-described transmission data to be transmitted includes location information designating the location of the other end of transmission to which the transmission data is to be transmitted and location information designating the location of a connection target unit with which a connection is to be established from the other end of transmission.

Upon execution of two-way communication with the other unit, the communication section 105 can refer to various kinds of databases recorded in the storage section 115 or the like, which is described later.

The control information transmission section 107 is composed of a CPU, ROM, RAM and so on, for example. If the control information indicating control of another unit is supplied from the selection section 101, the control information transmission section 107 transmits the supplied control information to the other unit via the communication section 105. For example, in the case where the information processing unit 10 according to the embodiment is a DMC conforming to the DLNA guideline, if the control information indicating "playback of the selected content on the selected DMR" is transmitted from the selection section 101, the control information transmission section 107 transmits "AVT::SetAVTransportURI" action, "AVT::Play" action or the like to the DMR via the communication section 105.

The location information determination section 109 is composed of a CPU, ROM, RAM and so on, for example. The location information determination section 109 determines whether the location information transferred from the communication section 105 corresponds to a unit existing in the same LAN as the information processing unit 10 according to the embodiment. The determination on the location information may be performed by comparing information about the LAN to which the other device connectable with the information processing unit 10 according to the embodiment belongs and the location information contained in the transmission data to be transmitted, which are transmitted from the communication section 105, for example.

As a result of the determination, if it is determined that the location information contained in the transmission data to be transmitted is entirely associated with a unit existing inside the LAN to which the information processing unit 10 according to the embodiment belongs, the location information determination section 109 supplies the determination result to the communication section 105. On the other hand, if it is determined that the location information contained in the transmission data to be transmitted is partly associated with a unit existing outside the LAN to which the information processing unit 10 according to the embodiment belongs, the location information determination section 109 transfers the location information associated with the unit existing outside the LAN to the location information conversion section 111, which is described later.

The location information conversion section 111 is composed of a CPU, ROM, RAM and so on, for example. The location information conversion section 111 converts the location information transferred from the location information determination section 109 into location information that explicitly specifies a remote access connection. The location information explicitly specifying a remote access connection has an identifier that explicitly specifies a remote access connection as a schema identifier, and it is formed using the schema identifier, a node identifier (node ID) assigned to a node to which a transmission destination information processing unit or information playback unit or a connection target unit is connected, and a private IP address of a transmission destination information processing unit or information playback unit or a connection target unit.

In the information processing unit 10 according to the embodiment, the location information conversion section 111 converts the location information for which remote access is necessary into the location information that explicitly specifies a remote access connection. Thus, another device (e.g. another information processing unit 10 or the information playback unit 20) that receives the converted location information can easily determine whether it is the location information for which remote access is necessary or the location information which can be connected by a normal connection without creating a remote access connection.

The location information explicitly specifying a remote access connection is described in further detail later.

The display control section 113 is composed of a CPU, ROM, RAM and so on, for example, and controls display of various kinds of information to be displayed on the display section (not shown) placed in the information processing unit 10 according to the embodiment. For example, the display control section 113 can display a list or the like acquired by the display information acquisition section 103 and a display object or the like corresponding to various kinds of operation control executable by the information processing unit 10 on the display section (not shown).

The storage section 115 is capable of storing various parameters, the progress of processing and so on that are necessary to be stored when the information processing unit 10 according to the embodiment performs some processing, various kinds of databases, or the like. Data reading and wiring can be made freely on the storage section 115 by the selection section 101, the display information acquisition section 103, the communication section 105, the control information transmission section 107, the location information determination section 109, the location information conversion section 111, the display control section 113 and so on.

One example of the functions of the information processing unit 10 according to the embodiment is described in the foregoing. Each of the above-described elements may be configured using a general-purpose member or circuit, or it may be configured by hardware specialized to the function of each element. Further, the function of each element may be entirely realized by CPU or the like. It is thereby possible to change the configuration to use as appropriate according to the technique level when implementing the embodiment.

### <Configuration of the information playback unit 20>

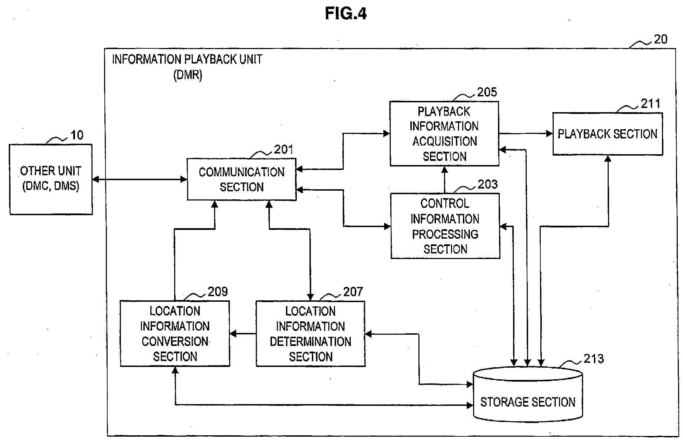

The configuration of the information playback unit 20 according to the embodiment is described hereinafter in detail with reference to FIG. 4. FIG. 4 is a block diagram illustrating the configuration of the information playback unit 20 according to the embodiment.

The information playback unit 20 according to the embodiment mainly includes a communication section 201, a control information processing section 203, a playback information acquisition section 205, a location information determination section 207, a location information conversion section 209, a playback section 211 and a storage section 213 as shown in FIG. 4, for example.

The communication section 201 is composed of a CPU, ROM, RAM, a communication unit and so on, for example. The communication section 201 establishes a connection between the information playback unit 20 according to the embodiment and another unit such as a further information processing unit and performs data transmission and reception with the other unit. When a connection is established with the other unit, for example, the communication section 201 acquires information about the LAN to which the other unit belongs (e.g. information about a node ID and an IP address range and information about another node belonging to the LAN) from the other unit and outputs the acquired information to the location information determination section 207 and the location information conversion section 209, which are described later.

If a request for transmitting information is made from the control information processing section 203 or the playback information acquisition section 205, which is described later, the communication section 201 first outputs location information that is contained in the transmission data to be transmitted to the location information determination section 207, which is described later.

If a determination result indicating that the location information contained in the transmission data to be transmitted is entirely associated with a unit existing inside the LAN to which the information playback unit 20 according to the embodiment belongs is supplied from the location information determination section 207, which is described later, the communication section 201 transmits the transmission data using the location information contained in the transmission data to be transmitted without any change.

If, on the other hand, new location information is supplied from the location information conversion section 209, which is described later, the communication section 201 converts the location information contained in the transmission data to be transmitted into the location information supplied from the location information conversion section 209 and then transmits the transmission data.

Upon execution of two-way communication with the other unit, the communication section 201 can refer to various kinds of databases recorded in the storage section 213 or the like, which is described later.

The control information processing section 203 is composed of a CPU, ROM, RAM and so on, for example. The control information processing section 203 receives control information that is transmitted from another device such as the information processing unit 10 via the communication section 201 and processes the received control information. Further, if the received control information contains control information indicating acquisition and playback of playback information such as content from a connection target unit, the control information processing section 203 outputs the control information to the playback information acquisition section 205, which is described later.

Consider, for example, the case where the information playback unit 20 according to the embodiment is a DMR conforming to the DLNA guideline, and it receives control information from a DMC, which is an example of the information processing unit 10. In such a case, if control information such as "AVT::SetAVTransportURI" action and "AVT::Play" action is transmitted from the DMC, the control information processing section 203 responds to the DMC from which the control information is transmitted. Further, if "AVT::Play" action is transmitted from the DMC, which is an example of the information processing unit 10, the control information processing section 203 notifies the reception of the action to the playback information acquisition section 205.

The playback information acquisition section 205 is composed of a CPU, ROM, RAM and so on, for example. When a control signal indicating acquisition and playback of playback information to be played back from a connection target unit is transferred from the control information processing section 203, the playback information acquisition section 205 acquires the playback information such as content from the connection target unit via the communication section 201. The acquired playback information is transferred to the playback section 211, which is described later. The playback information acquisition section 205 may record the acquired playback information such as content into the storage section 213, which is described later.

Consider, for example, the case where the information playback unit 20 according to the embodiment is a DMR conforming to the DLNA guideline, and it receives control information from a DMC, which is an example of the information processing unit 10 and acquires content from a DMS, which is an example of the information processing unit 10. In such a case, if control information such as "AVT::Play" action is transmitted from the DMC, the reception of the action is notified from the control information processing section 203 to the playback information acquisition section 205. Receiving the notification, the playback information acquisition section 205 supplies control information "HTTP GET" action to the connection target unit (i.e. the DMS) that is designated by "AVT::SetAVTransportURI" action and acquires the content.

The location information determination section 207 is composed of a CPU, ROM, RAM and so on, for example. The location information determination section 207 determines whether the location information transferred from the communication section 201 corresponds to a unit existing in the same LAN as the information playback unit 20 according to the embodiment. The determination on the location information may be performed by comparing information about the LAN to which the other device connectable with the information playback unit 20 according to the embodiment belongs and the location information contained in the transmission data to be transmitted, which are transferred from the communication section 201, for example.

As a result of the determination, if it is determined that the location information contained in the transmission data to be transmitted is entirely associated with a unit existing inside the LAN to which the information playback unit 20 according to the embodiment belongs, the location information determination section 207 supplies the determination result to the communication section 201. On the other hand, if it is determined that the location information contained in the transmission data to be transmitted is partly associated with a unit existing outside the LAN to which the information playback unit 20 according to the embodiment belongs, the location information determination section 207 transfers the location information associated with the unit existing outside the LAN to the location information conversion section 209, which is described later.

Further, if the location information transferred from the communication section 201 is location information that explicitly specifies a remote access connection, the location information determination section 207 notifies that to the communication section 201. Receiving the notification, the communication section 201 performs communication with the unit associated with the location information using the location information that explicitly specifies a remote access connection as it is.

The location information conversion section 209 is composed of a CPU, ROM, RAM and so on, for example. The location information conversion section 209 converts the location information transferred from the location information determination section 207 into location information that explicitly specifies a remote access connection. The location information explicitly specifying a remote access connection has an identifier that explicitly specifies a remote access connection as a schema identifier, and it is composed of the schema identifier, a node identifier (node ID) assigned to a node to which a transmission destination information processing unit or a connection target unit is connected, and a private IP address of a transmission destination information processing unit or a connection target unit.

The location information explicitly specifying a remote access connection is described in further detail later.

The playback section 211 is composed of a CPU, ROM, RAM and so on, for example. The playback section 211 plays back the playback information such as content that is acquired by the playback information acquisition section 205 on a display section (not shown) that is placed in the information playback unit 20 according to the embodiment. The playback section 211 may play back the playback information by performing various kinds of processing such as decoding the acquired playback information or changing a display size. Further, the playback section 211 can refer to various kinds of databases or the like recorded in the storage section 213, which is described later.

The storage section 213 is capable of storing various parameters, the progress of processing and so on that are necessary to be stored when the information playback unit 20 according to the embodiment performs some processing, various kinds of databases, or the like. Further, in the storage section 213, various kinds of control information received by the control information processing section 203 and playback information such as content acquired by the playback information acquisition section 205 may be recorded. Data reading and wiring can be made freely on the storage section 213 by the communication section 201, the control information processing section 203, the playback information acquisition section 205, the location information determination section 207, the location information conversion section 209, the playback section 211 and so on.

Although the case where the communication section 201 notifies the location information determination section 207 to perform determination of location information is described above, the control information processing section 203 may direct the location information determination section 207 to perform determination of location information contained in the received control information, or the playback information acquisition section 205 may direct the location information determination section 207 to perform determination of location information designating the location of playback information.

One example of the functions of the information playback unit 20 according to the embodiment is described in the foregoing. Each of the above-described elements may be configured using a general-purpose member or circuit, or it may be configured by hardware specialized to the function of each element. Further, the function of each element may be entirely realized by CPU or the like. It is thereby possible to change the configuration to use as appropriate according to the technique level when implementing the embodiment.

Although the case where the information playback unit 20 is a standalone unit separated from the information processing unit 10 is described in above, the information processing unit 10 and the information playback unit 20 may be integrated as one component.

Further, the information playback unit 20 may be hardware or a program such as a WWW browser.

### <Location information explicitly specifying a remote access connection>

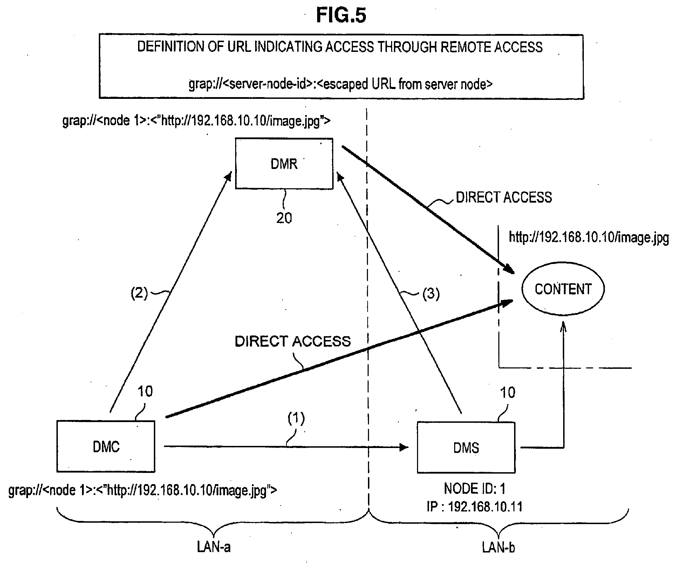

Location information explicitly specifying a remote access connection that is used by the information processing unit 10 and the information playback unit 20 according to the embodiment is described hereinafter in detail with reference to FIG. 5. FIG. 5 is an explanatory view illustrating location information that explicitly specifies a remote access connection.

Firstly, a URL that is used for location information that explicitly specifies a remote access connection is described hereinafter. A URL can represent an access method (schema) in addition to indicating the location on a given network. For example, the URL "http://1.2.3.4:10000/contents" represents an access by HTTP to a 10000-port of a device having the IP address "1.2.3.4", specifying /contents as a path.

In the information processing unit 10 and the information playback unit 20 according to the embodiment, location information explicitly specifying a remote access connection is defined as shown in FIG. 5, for example. The location information has an identifier that explicitly specifies a remote access connection, and it is composed of the schema identifier, a node identifier (node ID) assigned to a node to which a transmission destination information processing unit or a connection target unit is connected, and a private IP address (or a URL that can be resolved by a node) of a transmission destination information processing unit or a connection target unit.

Specifically, the location information is composed of "grap://" that is an identifier explicitly specifying a remote access connection, "<server-node-id>" using a node identifier assigned to a node to which a connection destination unit is connected, and "<private IP address>" that is a private IP address of a connection destination unit viewed from a node as shown in FIG. 5.

For example, consider the case where a DMC and a DMR make a connection to content that is managed by a DMS in the 3-box model conforming to the DLNA guideline as shown in FIG. 5. The DMC and the DMR belong to the LAN-a, and the DMS and the content managed by the DMS belong to the LAN-b. A "node ID:1" that is a unique node identifier is associated with the DMS, and a private IP address is associated with the DMS and the content.

In this case, a connection target unit is a unit at which the content is held and to which the private IP address "192.168.10.10" is associated, and a node to which the connection target unit is connected is a DMS. If the file name of the content is "image.jpg", for example, the location information explicitly specifying a remote access connection is "grap://<node1><http://192.168.10.10/image.jpg>" as shown in FIG. 5.

By defining the described location information like this, the DMC and the DMR shown in FIG. 5 can directly access the file "image.jpg" of the unit with the IP address "192.168.10.10".

Because the location information explicitly specifying a remote access connection according to the embodiment complies with the URL format rule, it is described, more specifically, by performing escapement using % on the URL from the node, which is the third element.

For example, access that can be specified by "http://192.168.10.10/content" from the node ID "node-A" can be represented by the URL composed of a character string "grap://node-A:http%3A%2F%2F192.168.10.10%2Fcontent" for a device that can make remote access to the device having the node ID "node-A".

### <Location information conversion method according to the embodiment>

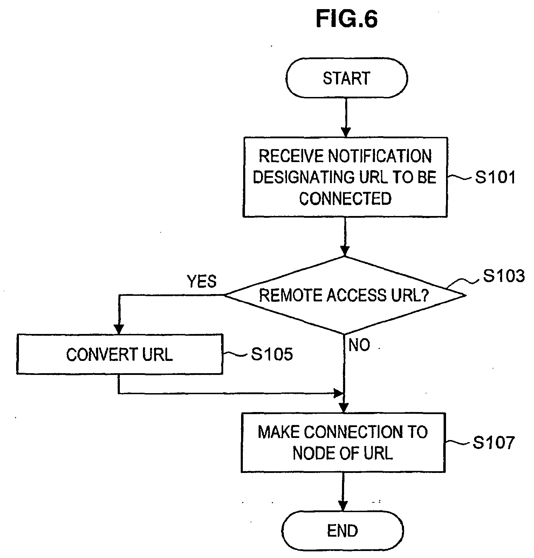

A method of converting location information that is performed in the information processing unit 10 and the information playback unit 20 according to the embodiment is described hereinafter with reference to FIG. 6. FIG. 6 is a flowchart illustrating the method of converting location information that is performed in the information processing unit 10 and the information playback unit 20 according to the embodiment.

Firstly, when location information (URL) of a connection destination is supplied (step S101), the communication section 105 of the information processing unit 10 or the communication section 201 of the information playback unit 20 according to the embodiment transfers the supplied location information to the location information determination section 109 or 207.

The location information determination section 109 or 207 checks whether the supplied location information is associated with a unit that exists in the same LAN as the information processing unit 10 or the information playback unit 20 so as to determine whether remote access is necessary for the URL (step S103).

If the supplied location information is the URL for which remote access is necessary, the location information determination section 109 or 207 transfers the location information to the location information conversion section 111 or 209. The location information conversion section 111 or 209 converts the transferred location information into location information that explicitly specifies a remote access connection (step S105) and outputs it to the communication section 105 or 201.

On the other hand, if the supplied location information is the URL which can be connected by a normal connection method, not by remote access, the location information determination section 109 or 207 notifies the communication section 105 or 201 that conversion of the location information is not necessary.

Receiving the notification that conversion of the location information is not necessary or the converted location information, the communication section 105 or 201 makes a connection to the node designated by the location information using the specified connection method (step S107) and executes prescribed processing.

As described above, the location information conversion method according to the embodiment determines whether the location information for which establishment of a connection is requested is location information for which remote access is necessary or location information which can be connected by a normal connection method, not by remote access, and performs conversion of the location information according to the determination result. It is thereby possible to easily establish a remote access connection between a device inside a LAN and a device outside the LAN.

### (First alternative example)

### <Configuration of the information playback unit 20>

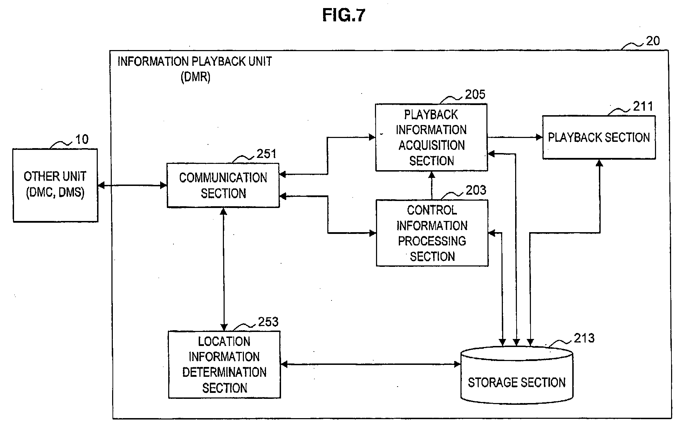

A first alternative example of the information playback unit 20 according to the first embodiment of the present invention is described hereinafter in detail with reference to FIG. 7. FIG. 7 is a block diagram illustrating the information playback unit 20 according to the alternative example.

The information playback unit 20 according to the alternative example mainly includes a control information processing section 203, a playback information acquisition section 205, a playback section 211, a storage section 213, a communication section 251 and a location information determination section 253 as shown in FIG. 7, for example.

The control information processing section 203, the playback information acquisition section 205, the playback section 211 and the storage section 213 according to the alternative example have substantially the same configuration and the same effects as the control information processing section 203, the playback information acquisition section 205, the playback section 211 and the storage section 213 of the information playback unit 20 according to the first embodiment of the present invention, and therefore detailed explanation is omitted.

The communication section 251 is composed of a CPU, ROM, RAM, a communication unit and so on, for example. The communication section 251 establishes a connection between the information playback unit 20 according to the alternative example and another unit such as an information processing unit and performs data transmission and reception with the other unit. When a connection is established with the other unit, for example, the communication section 251 may acquire information about the LAN to which the other unit belongs (e.g. information about a node ID and an IP address range and information about another node belonging to the LAN) from the other unit and output the acquired information to the location information determination section 253.

If a request for transmitting control information is made from the control information processing section 203 or the playback information acquisition section 205, the communication section 251 first outputs location information contained in the control information to the location information determination section 253, which is described later.

If a determination result indicating that the location information designating the transmission destination of the control information is location information explicitly specifying a remote access connection is supplied from the location information determination section 253, which is described later, the communication section 251 transmits transmission data (i.e. the control information) after establishing a remote access connection.

On the other hand, if a determination result indicating that the location information designating the transmission destination of the control information is not location information explicitly specifying a remote access connection is supplied from the location information determination section 253, which is described later, the communication section 251 transmits transmission data (i.e. the control information) after establishing a connection by a normal connection method.

Upon execution of two-way communication with the other unit, the communication section 251 can refer to various kinds of databases recorded in the storage section 213 or the like.

The location information determination section 253 is composed of a CPU, ROM, RAM and so on, for example. The location information determination section 253 determines whether the location information that is transferred from the communication section 251 is location information explicitly specifying a remote access connection. The determination on location information can be performed based on whether an identifier that explicitly specifies a remote access connection exists in the description of the location information transferred from the communication section 251, for example.

As a result of the determination, if it is determined that the location information contained in the transmission data to be transmitted is not location information explicitly specifying a remote access connection, the location information determination section 253 supplies the determination result to the communication section 251. If, on the other hand, it is determined that the location information contained in the transmission data to be transmitted is location information explicitly specifying a remote access connection, the location information determination section 253 supplies the determination result to the communication section 251.

As described above, the information playback unit 20 according to the alternative example determines whether the location information used when establishing a connection explicitly specifies a remote access connection, thereby automatically deciding a connection method with a connection target unit.

Consider, for example, the case where the information playback unit 20 according to the alternative example is a DMR conforming to the DLNA guideline. In this case, if location information such as content that is transmitted from a DMC explicitly specifies a remote access connection, the DMR can automatically select a remote access connection even if the identical IP address exists in the same LAN.

One example of the functions of the information playback unit 20 according to the alternative example is described in the foregoing. Each of the above-described elements may be configured using a general-purpose member or circuit, or it may be configured by hardware specialized to the function of each element. Further, the function of each element may be entirely realized by CPU or the like. It is thereby possible to change the configuration to use as appropriate according to the technique level when implementing the embodiment.

### <Information playback method in the alternative example>

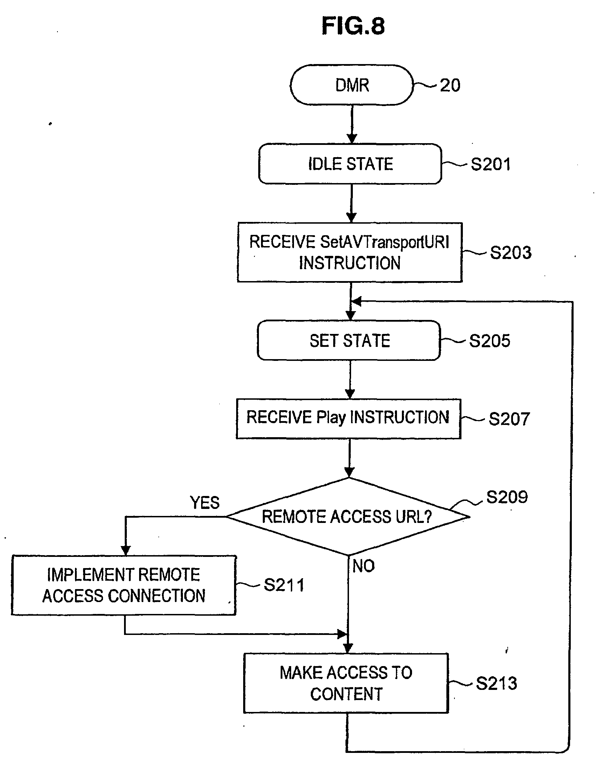

An information playback method that is performed in the information playback unit 20 according to the alternative example is described hereinafter in detail with reference to FIG. 8. FIG. 8 is a flowchart illustrating the information playback method according to the alternative example.

The flowchart shown in FIG. 8 illustrates the case where the information playback unit 20 according to the alternative example is a DMR in the 3-box model conforming to the DLNA guideline.

The information playback unit 20 according to the alternative example is in IDLE state when the main power is turned on (step S201). If control information "SetAVTransportURI" action is transmitted to the information playback unit 20 from an external unit (e.g. a DMC, which an example of the information processing unit 10), the communication section 251 of the information playback unit 20 according to the alternative example receives the control information (step S203) and transfers it to the control information processing section 203. The control information processing section 203 responds to the information processing unit 10 from which the control information is transmitted, sets the location information (URL) contained in the received "AVT::SetAVTransportURI" action as a connection target unit (step S205) and notifies it to the playback information acquisition section 205.

Next, if control information "AVT::Play" action is transmitted from an external unit (e.g. a DMC, which an example of the information processing unit 10), the communication section 251 according to the alternative example receives the control information (step S207) and notifies the playback information acquisition section 205 that the Play action is received.

Receiving the notification, the playback information acquisition section 205 requests the communication section 251 to acquire playback information from the location information (URL) that has been set as the connection target unit. Receiving the request, the communication section 251 supplies the provided location information to the location information determination section 253. The location information determination section 253 then determines whether the location information supplied from the communication section 251 is location information that explicitly specifies a remote access connection (step S209). Specifically, the location information determination section 253 determines whether an identifier (schema identifier) that explicitly specifies a remote access connection exists in the supplied location information.

As a result of the determination, if the identifier explicitly specifying a remote access connection exists, the location information determination section 253 notifies that to the communication section 251. Receiving the notification from the location information determination section 253, the communication section 251 establishes a connection using remote access with a unit having the node identifier described in the location information. After that, the communication section 251 makes access to the playback information (i.e. content) based on the private IP address that is described in the third element of the location information on the established connection.

On the other hand, if the identifier explicitly specifying a remote access connection does not exist, the location information determination section 253 notifies that to the communication section 251. Receiving the notification from the location information determination section 253, the communication section 251 establishes a connection with the connection target unit by a normal connection method without using remote access. After that, the communication section 251 makes access to the playback information (i.e. content) on the established connection.

Receiving the content as the playback information from the connection target unit, the communication section 251 transfers the acquired content to the playback information acquisition section 205. The playback information acquisition section 205 transfers the acquired playback information to the playback section 211, and the playback section 211 plays back the acquired playback information on a display section that is placed in the information playback unit 20.

As described above, the information playback method according to the alternative example determines whether the location information used when establishing a connection explicitly specifies a remote access connection, thereby automatically deciding a connection method with a connection target unit.

### <Specific example of the information processing method>

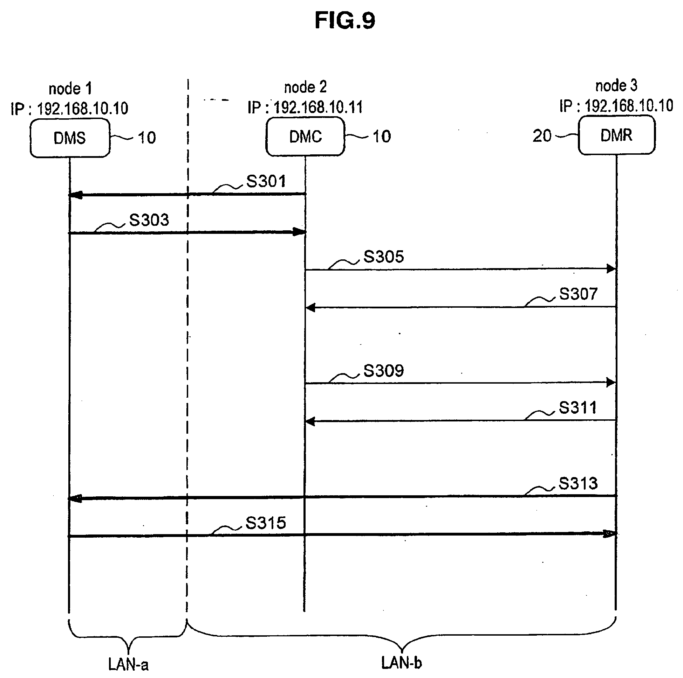

Specific examples of the information processing method according to a first embodiment of the present invention are described hereinafter in detail with reference to FIGS. 9 to 12. FIGS. 9 to 12 are flowcharts illustrating specific examples of the information processing method according to the embodiment.

In the examples shown in FIGS. 9 to 12, the 3-box model conforming to the DLNA guideline is used by way of illustration. In the following examples, a DMC and a DMS are taken as an example of the information processing unit 10 according to the embodiment, and a DMR is taken as an example of the information playback unit 20 according to the embodiment. The heavy line in FIGS. 9 to 12 indicates a connection using remote access.

### [When the DMS is in the environment through remote access]

Referring first to FIG. 9, an example of a sequence in the case where the DMS is in the environment through remote access in the 3-box model conforming to the DLNA guideline is described hereinafter. It is assumed that all of three kinds of units, the DMC, DMS and DMR, have remote access function.

First, the DMC determines that the DMS is in the environment through remote access and establishes a connection with the DMS using remote access. Specifically, the DMC makes a connection to the DMS (node ID="node1") using remote access, transmits control information "Browse()" action request to the DMS (step S301) and waits to receive "Browse()" action response. The DMS supplies "Browse()" action response to the DMC and transmits notification that the URL of the content, which is playback information, is "http://192.168.10.10/content" (step S303).

Then, the DMC determines that the DMR is in the environment which is connectable by a normal connection. In this case, because the DMR and the DMS belong to different LANs, the DMC determines that conversion of location information is necessary. As a result, in order to supply the acquired URL to the DMR, the DMC converts the location information into location information that explicitly specifies a remote access connection in the location information conversion section and thereby creates "grap://node 1:http%3A%2F%2F192.168.10.10%2Fcontent)" as location information. After that, the DMC transmits control information "SetAVTransportURI()" action request to the DMR and supplies the converted location information (URL) to the DMR (step S305). The DMR supplies control information "SetAVTransportURI()" action response to the DMC and notifies that the designated URL is accepted (step S307).

Further, the DMC supplies control information "Play()" action request to the DMR (step S309). The DMR supplies control information "Play()" action response to the DMC and notifies that the control information is accepted (step S311). Then, the DMR makes a connection by remote access to the DMS (node ID="node1") using the supplied converted location information and supplies a request for acquiring the content designated by "http://192.168.10.10/content" by "HTTP GET Request" on the remote connection (step S313).

The DMS responds to the content acquisition request from the DMR (step S315) and transmits the content to the DMR by "HTTP GET Response".

### [When the DMR is in the environment through remote access (1)]

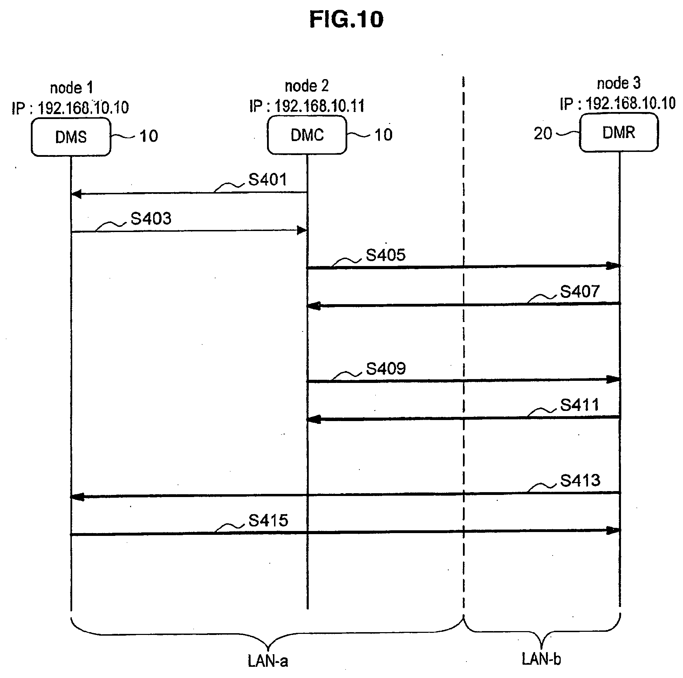

Referring next to FIG. 10, an example of a sequence in the case where only the DMR is in the environment through remote access in the 3-box model conforming to the DLNA guideline is described hereinafter. It is assumed that all of three kinds of units, the DMC, DMS and DMR, have remote access function.

First, the DMC determines that the DMS is in the environment which is connectable by a normal connection and establishes a connection with the DMS using a normal connection. Specifically, the DMC makes a connection to the DMS using a normal connection and transmits control information "Browse()" action request to the DMS (step S401). The DMS supplies "Browse()" action response to the DMC and transmits notification that the URL of the content, which is playback information, is "http://192.168.10.10/content" (step S403).

Then, the DMC determines that the DMR is in the environment through remote access. In this case, because the DMR and the DMS belong to different LANs, the DMC determines that conversion of location information is necessary. As a result, in order to supply the acquired URL to the DMR, the DMC converts the location information into location information that explicitly specifies a remote access connection in the location information conversion section and thereby creates "grap://node1:http%3A%2F%2F192.168.10.10%2Fcontent)" as location information. After that, the DMC makes a connection to the DMR (node ID="node3") using remote access. If a connection is established, the DMC transmits control information "SetAVTransportURI()" action request to the DMR and supplies the converted location information (URL) to the DMR (step S405). The DMR supplies control information "SetAVTransportURI()" action response to the DMC and notifies that the designated URL is accepted (step S407).

Further, the DMC supplies control information "Play()" action request to the DMR (step S409). The DMR supplies control information "Play()" action response to the DMC and notifies that the control information is accepted (step S411). Then, the DMR makes a connection by remote access to the DMS (node ID="node1") using the supplied converted location information and supplies a request for acquiring the content designated by "http://192.168.10.10/content" by "HTTP GET Request" on the remote connection (step S413).

The DMS responds to the content acquisition request from the DMR (step S415) and transmits the content to the DMR by "HTTP GET Response".

### [When the DMR is in the environment through remote access (2)]

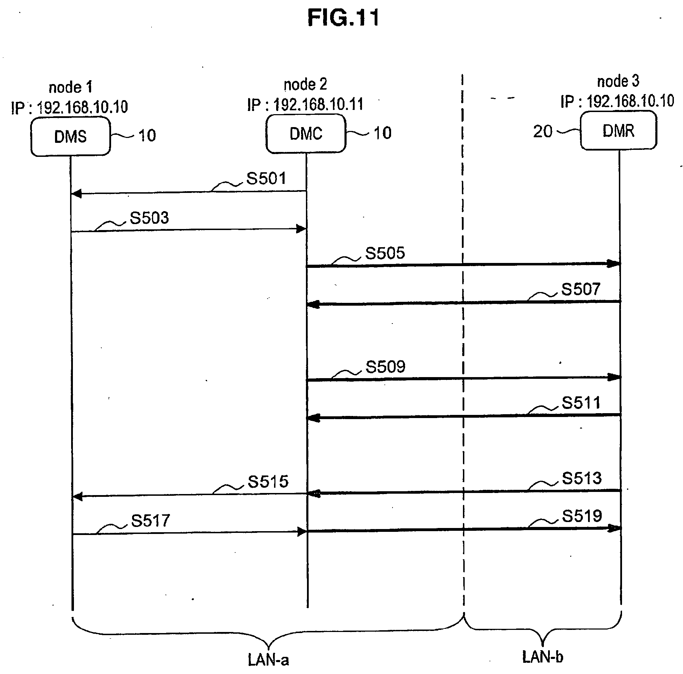

Referring next to FIG. 11, an example of a sequence in the case where only the DMR is in the environment through remote access in the 3-box model conforming to the DLNA guideline is described hereinafter. It is assumed that two kinds of units, the DMC and DMR, have remote access function, and the DMS does not have remote access function.

First, the DMC determines that the DMS is in the environment which is connectable by a normal connection and establishes a connection with the DMS using a normal connection. Specifically, the DMC makes a connection to the DMS using a normal connection and transmits control information "Browse()" action request to the DMS (step S501). The DMS supplies "Browse()" action response to the DMC and transmits notification that the URL of the content, which is playback information, is "http://192.168.10.10/content" (step S503). Upon establishment of a connection with the DMC, the DMS notifies the DMC that the DMS does not have remote access function.

Then, the DMC determines that the DMR is in the environment through remote access. In this case, because the DMR and the DMS belong to different LANs, the DMC determines that conversion of location information is necessary. Further, because the DMC has been informed that the DMS does not have remote access function, the DMC knows that a direct communication from the DMR to the DMS is not possible. As a result, in order to supply the acquired URL to the DMR, the DMC converts the location information into location information that explicitly specifies a remote access connection in the location information conversion section and thereby creates location information so as to make a connection by remote access to the DMC (node ID="node2") and then make access from the DMC to the DMS by a normal connection. Specifically, the location information conversion section creates "grap://node2:http%3A%2F%2F192.168.10.10%2Fcontent)" as location information. After that, the DMC makes a connection to the DMR (node ID="node3") using remote access. If a connection is established, the DMC transmits control information "SetAVTransportURI()" action request to the DMR and supplies the converted location information (URL) to the DMR (step S505). The DMR supplies control information "SetAVTransportURI()" action response to the DMC and notifies that the designated URL is accepted (step S507).

Further, the DMC supplies control information "Play()" action request to the DMR (step S509). The DMR supplies control information "Play()" action response to the DMC and notifies that the control information is accepted (step S511). Then, the DMR makes a connection by remote access to the DMC (node ID="node2") using the supplied converted location information (step S513), the DMC establishes a communication channel to the DMS by a normal connection (step S515), and then supplies a request for acquiring the content designated by "http://192.168.10.10/content" by "HTTP GET Request".

In response to the content acquisition request from the DMR, the DMS first transmits the content to the DMC by a normal connection by "HTTP GET Response" (step S517), and then the DMC transmits the content to the DMR by a remote access connection by "HTTP GET Response" (step S519).

As described above, in this specific example, in order to make a connection to the DMS that does not have remote access function, remote access is made to the DMC that has remote access function and exists in the same LAN as the DMS, thus using the DMC as a relay node.

### [When the DMC, DMS and DMR are in the environment through remote access]

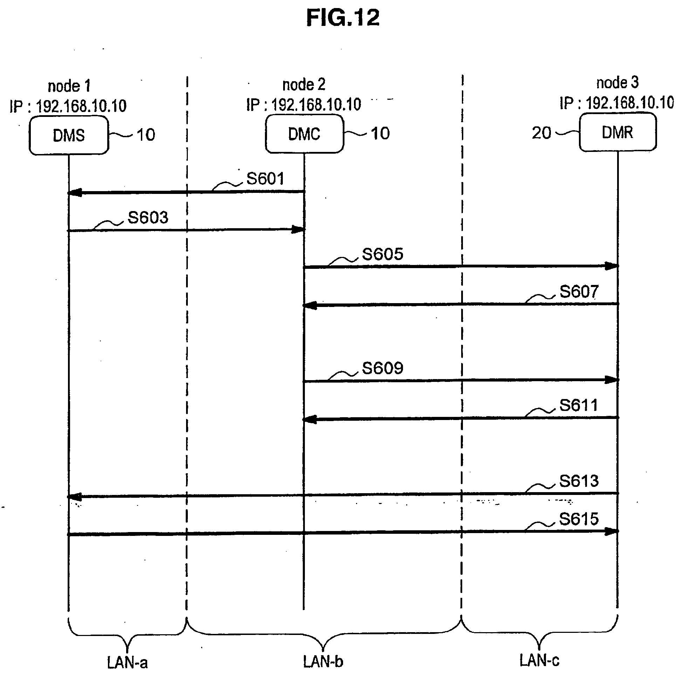

Referring then to FIG. 12, an example of a sequence in the case where all of the DMC, DMS and DMR are in the environment through remote access in the 3-box model conforming to the DLNA guideline is described hereinafter. It is assumed that all of three kinds of units, the DMC, DMS and DMR, have remote access function.

First, the DMC determines that the DMS is in the environment through remote access and establishes a connection with the DMS using remote access. Specifically, the DMC makes a connection to the DMS (node ID="node1") using remote access and transmits control information "Browse()" action request to the DMS (step S601). The DMS then supplies "Browse()" action response to the DMC and transmits notification that the URL of the content, which is playback information, is "http://192.168.10.10/content" (step S603).

Then, the DMC determines that the DMR is in the environment through remote access. In this case, because the DMR and the DMS belong to different LANs, the DMC determines that conversion of location information is necessary. As a result, in order to supply the acquired URL to the DMR, the DMC converts the location information into location information that explicitly specifies a remote access connection using the location information conversion section and thereby creates "grap://node1:http%3A%2F%2F192.168.10.10%2Fcontent)" as location information. After that, the DMC makes a connection to the DMR (node ID="node3") using remote access. If a connection is established, the DMC transmits control information "SetAVTransportURI()" action request to the DMR and supplies the converted location information (URL) to the DMR (step S605). The DMR supplies control information "SetAVTransportURI()" action response to the DMC and notifies that the designated URL is accepted (step S607).

Further, the DMC supplies control information "Play()" action request to the DMR (step S609). The DMR supplies control information "Play()" action response to the DMC and notifies that the control information is accepted (step S611). Then, the DMR makes a connection by remote access to the DMS (node ID="node1") using the supplied converted location information and supplies a request for acquiring the content designated by "http://192.168.10.10/content" by "HTTP GET Request" on the remote connection (step S613).

The DMS responds to the content acquisition request from the DMR (step S615) and transmits the content to the DMR by "HTTP GET Response".

As described in the four specific examples in the foregoing, the information processing method according to the embodiment can make a request for a connection by remote access to another unit with use of location information that explicitly specifies a remote access connection. A unit that executes connection handling can thereby easily determine whether a remote access connection is necessary or a normal connection is possible.

### [Cascade connection using location information]

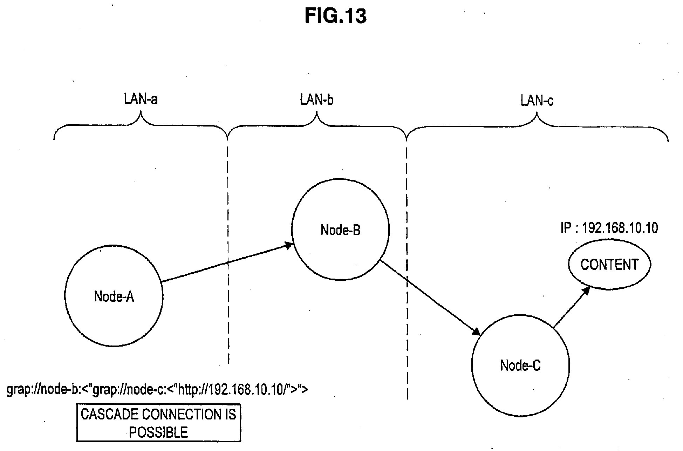

An application of location information according to the first embodiment of the present invention is described hereinafter in detail with reference to FIG. 13. FIG. 13 is a flowchart illustrating an application of location information according to the embodiment.

With use of the location information according to the embodiment (location information that explicitly specifies a remote access connection), it is possible to request a connection by remote access to another unit as described above. Therefore, a cascade connection as shown in FIG. 13 can be implemented by using the location information.

Consider, for example, the case where a unit of Node-A intends to acquire the content (IP address: 192.168.10.10) that is managed by a unit of Node-C as shown in FIG. 13. It is assumed, in this case, that although a remote access connection is possible between the unit of Node-A and a unit of Node-B and between the unit of Node-B and the unit of Node-C, direct communication is not possible between the unit of Node-A and the unit of Node-C due to a difference in a remote access scheme, for example.

With use of the location information explicitly specifying a remote access connection that is used in the information processing unit 10 and the information playback unit 20 according to the embodiment, it is possible to designate the location information explicitly specifying a remote access connection itself as the description of "URL that can be resolved from a node", which is the item described in the third place.

Therefore, the unit of Node-B can direct the unit of Node-A to make remote access to the unit of Node-C via the unit of Node-B. Specifically, the unit of Node-B supplies location information grap://node-b:<"grap://node-c:<http://192.168.10.10/">"> to the unit of Node-A as shown in FIG. 13, thereby enabling a cascade connecton between the unit of Node-A and the unit of Node-C.

### <Hardware configuration>

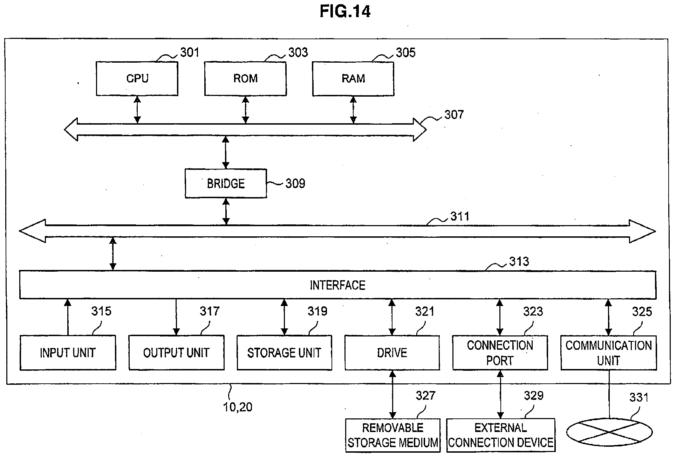

The hardware configuration of the information processing unit 10 according to the embodiment of the present invention is described hereinafter in detail with reference to FIG. 14. FIG. 14 is a block diagram illustrating the hardware configuration of the information processing unit 10 according to the embodiment.

The information processing unit 10 mainly includes a CPU 301, a ROM 303, a RAM 305, a host bus 307, a bridge 309, an external bus 311, an interface 313, an input unit 315, an output unit 317, a storage unit 319, a drive 321, a connection port 323, and a communication unit 325.

The CPU 301 serves as a processing unit and a control unit, and it controls the whole or part of operation in the information processing unit 10 according to programs stored in the ROM 303, the RAM 305, the storage unit 319 or a removable recording medium 327. The ROM 303 stores a program to be used by the CPU 301, a processing parameter and so on. The RAM 305 primarily stores a program to be used in the execution on the CPU 301, a parameter that varies in the execution and so on. The CPU 301, the ROM 303 and the RAM 305 are connected with each other through the host bus 307, which may be an internal bus such as a CPU bus.

The host bus 307 is connected to the external bus 311 such as a peripheral component interconnect/interface (PCI) bus via the bridge 309.

The input unit 315 is an operating means to be operated by a user, such as a mouse, a keyboard, a touch panel, a button, a switch or a lever, for example. The input unit 315 may be a remote controlling means (or a remote control) using an infrared ray or another radio wave, or an external connection device 329 corresponding to the operation of the information processing unit 10, such as a cellular phone or a PDA. Further, the input unit 315 includes an input control circuit that generates an input signal based on information input by a user using the above operating means and outputs it to the CPU 301, for example. A user of the information processing unit 10 manipulates the input unit 315 to thereby input various data or direct processing operation to the information processing unit 10.

The output unit 317 includes a display device such as a CRT display device, a liquid crystal display device, a plasma display device, an EL display device or a lamp, an audio output device such as a speaker or a headphone, and a device for visually or auditorily presenting acquired information to a user such as a printer, a cellular phone or a facsimile, for example. The output unit 317 outputs a result obtained by processing of the information processing unit 10, for example. Specifically, the display device displays a result obtained by processing of the information processing unit 10 by a text or an image. The audio output device converts an audio signal containing reproduced audio data, acoustic data and so on into an analog signal and outputs it.

The storage unit 319 is a device for data storage that is configured as an example of a storage section of the information processing unit 10. The storage unit 319 may be configured by a magnetic storage device such as a hard disk drive (HDD), a semiconductor storage device, an optical storage device, a magneto-optical storage device or the like. The storage unit 319 stores a program to be executed by the CPU 301, various data, acoustic signal data or image signal data acquired from the outside, and so on.

The drive 321 is a reader/writer for a storage medium, which is built in the information processing unit 10 or attached externally. The drive 321 reads information that is recorded in the removable storage medium 327 such as a magnetic disk, an optical disk, a magneto-optical disk or a semiconductor memory which is attached thereto and outputs the information to the RAM 305. Further, the drive 321 can write information into the removable storage medium 327 such as a magnetic disk, an optical disk, a magneto-optical disk or a semiconductor memory which is attached thereto. The removable storage medium 327 may be a DVD medium, an HD-DVD medium, a Blu-ray medium, a compact flash (CF) (registered trademark), a memory stick, a secure digital (SD) memory card or the like. Further, the removable storage medium 327 may be an integrated circuit (IC) card or an electronic device with a contactless IC chip mounted thereon.

The connection port 323 is a port for directly connecting a device to the information processing unit 10, such as a universal serial bus (USB) port, an IEEE 1394 port such as i.Link, a small computer system interface (SCSI) port, an RS-232C port, an optical audio terminal, or a high-definition multimedia interface (HDMI) port. By connecting the external connection device 329 to the connection port 323, the information processing unit 10 can directly acquire acoustic signal data and image signal data from the external connection device 329 or supply acoustic signal data and image signal data to the external connection device 329.

The communication unit 325 is a communication interface that is configured by a communication device or the like for establishing a connection with 1 communication network 331, for example. The communication unit 325 may be a communication card for wired or wireless local area network (LAN), Bluetooth or wireless USB (WUSB), a router for optical communication, a router for asymmetric digital subscriber line (ADSL) or a modem for various kinds of communications, for example. The communication unit 325 can transmit and receive an acoustic signal or the like to and from the Internet or another communication device. Further, the communication network 331 connected to the communication unit 325 is configured by a network or the like connected by wired or wireless means, and it may be the Internet, home LAN, infrared data communication, radio wave communication, satellite communication and so on.

One example of the hardware configuration capable of implementing the functions of the information processing unit 10 according to the embodiment of the present invention is described in the foregoing. Each of the above-described elements may be configured using a general-purpose member or circuit, or it may be configured by hardware specialized to the function of each element. It is thereby possible to change the hardware configuration to use as appropriate according to the technique level when implementing the embodiment.

The information playback unit 20 according to the embodiment of the present invention has substantially the same hardware configuration as the information processing unit 10 according to the embodiment of the present invention, and therefore repeated explanation is omitted.

It should be understood by those skilled in the art that various modifications, combinations, sub-combinations and alterations may occur depending on design requirements and other factors insofar as they are within the scope of the appended claims.

## Claims

1. An information processing unit (10) comprising:
a location information transmission section (107) adapted to transmit, to a further information processing unit connected to the information processing unit, location information indicating a location of a connection target unit to which the further information processing unit is to be connected;
a location information determination section (109) adapted to determine whether the further information processing unit and the connection target unit exist in the same LAN by referring to the location information before being transmitted; and
a location information conversion section (111) adapted to convert the location information to be transmitted into location information explicitly specifying a remote access connection according to a determination result of the location information determination section,
**characterised in that** each of the further information processing unit and the connection target unit is connected by a private address to a node belonging to the same LAN as a corresponding one of the further information processing unit and the connection target unit and having a unique node identifier, and
when the location information conversion section (111) converts the location information to be transmitted into said location information explicitly specifying a remote access connection, the converted location information comprising: a schema identifier explicitly specifying remote access connection; the unique node identifier assigned to the node to which one of the further information processing unit and the connection target unit is connected; and the private address of one of the further information processing unit and the connection target unit.

2. An information playback unit (20) comprising:
a location information reception section (201) adapted to receive location information indicating a location of a connection target unit to be connected;
a location information determination section (207) adapted to determine whether the connection target unit belongs to the same LAN by referring to the received location information;
a location information conversion section (209) adapted to convert the received location information into location information explicitly specifying a remote access connection according to a determination result of the location information determination section; and
a playback information acquisition section (205) adapted to acquire playback information to be played back from the connection target unit based on the location information, **characterized in that** the connection target unit is connected by a private address to a node belonging to the same LAN as the connection target unit and having a unique node identifier, and
when the location information conversion section (209) converts the location information to be transmitted into said location information explicitly specifying a remote access connection, the converted location information comprising: a scheme identifier explicitly specifying remote access connection, the node identifier assigned to the node to which the connection target unit is connected, and the private address of the connection target unit.

3. The information playback unit according to claim 2, wherein
the location information determination section further determines whether the location information is location information explicitly specifying a remote access connection, and
if the location information is location information explicitly specifying a remote access connection, the location information conversion section refrains from converting the location information.

4. An information processing method to transmit, to a further information processing unit connected to an information processing unit, location information indicating a location of a connection target unit to which the further information processing unit is to be connected, the method comprising the steps of:
determining whether the further information processing unit and the connection target unit exist in the same LAN by referring to the location information before being transmitted to the further information processing unit;
converting the location information to be transmitted into location information explicitly specifying a remote access connection according to a determination result on the location information; and
transmitting one of the location information and the location information explicitly specifying a remote access connection to the further information processing unit,
wherein each of the further information processing unit and the connection target unit is connected by a private address to a node belonging to the same LAN as a corresponding one of the further information processing unit and the connection target unit and having a unique node identifier and
wherein, when converting the location information to be transmitted into location information explicitly specifying a remote access connection, the converted location information comprises: a scheme identifier explicitly specifying a remote access connection; the unique node identifier assigned to the node to which one of the further information processing unit and the connection target unit is connected; and the private address of one of the further information processing unit and the connection target unit.

5. An information playback method comprising the steps of:
receiving location information indicating a location of a connection target unit to be connected;
determining whether the connection target unit belongs to the same LAN by referring to the received location information;
converting the received location information into location information explicitly specifying a remote access connection according to a determination result on the location information; and
acquiring playback information to be played back from the connection target unit based on the location information, **characterised in that** the connection target unit is connected by a private address to a node belonging to the same LAN as the connection target unit and having a unique node identifier and **in that**, when converting the location information to be transmitted into location information explicitly specifying a remote access connection, the converted location information comprises: a scheme identifier explicitly specifying a remote access connection; the node identifier assigned to the node to which the connection target unit is connected; and the private address of the connection target unit.

6. A computer program containing computer readable instructions which, when loaded onto a computer, configure the computer to perform a method according to either claims 4 or 5.

7. An information processing system comprising an information processing unit according to claim 1 coupled to an information playback unit according to claim 2 over a network.

## Patentansprüche

1. Informationsverarbeitungseinheit (10), umfassend:
einen Positionsinformationsübertragungsabschnitt (107), der zum Übertragen an eine weitere Informationsverarbeitungseinheit, welche mit der Informationsverarbeitungseinheit verbunden ist, von Positionsinformationen ausgelegt ist, die eine Position einer Verbindungszieleinheit anzeigen, mit der die weitere Informationsverarbeitungseinheit verbunden werden soll;
einen Positionsinformationsbestimmungsabschnitt (109), der zum Bestimmen, ob die weitere Informationsverarbeitungseinheit und die Verbindungszieleinheit im selben LAN vorhanden sind, durch Bezugnahme auf die Positionsinformationen, bevor sie übertragen werden, ausgelegt ist; und
einen Positionsinformationskonversionsabschnitt (111), der zum Konvertieren der Positionsinformationen, die übertragen werden sollen, in Positionsinformationen ausgelegt ist, die explizit eine Fernzugriffsverbindung entsprechend einem Bestimmungsergebnis des Positionsinformationsbestimmungsabschnitts angeben,
**dadurch gekennzeichnet, dass** jede Einheit aus der weiteren Informationsverarbeitungseinheit und der Verbindungszieleinheit durch eine Privatadresse mit einem Knoten verbunden ist, der zum selben LAN gehört wie eine Einheit aus der weiteren Informationsverarbeitungseinheit und der Verbindungszieleinheit, und einen eindeutigen Knotenidentifikator hat, und
wenn der Positionsinformationskonversionsabschnitt (111) die Positionsinformationen, die übertragen werden sollen, in die Positionsinformationen konvertiert, die explizit die Fernzugriffsverbindung angeben, wobei die konvertierten Positionsinformationen Folgendes umfassen: einen Schemaidentifikator, der explizit eine Fernzugriffsverbindung angibt; den eindeutigen Knotenidentifikator, der dem Knoten zugeordnet ist, mit dem eine Einheit aus der weiteren Informationsverarbeitungseinheit und der Verbindungszieleinheit verbunden ist; und die Privatadresse von einer Einheit aus der weiteren Informationsverarbeitungseinheit und Verbindungszieleinheit.

2. Informationsplaybackeinheit (20), umfassend:
einen Positionsinformationsempfangsabschnitt (201), der zum Aufnehmen von Positionsinformationen ausgelegt ist, die eine Position einer Verbindungszieleinheit, die angeschlossen werden soll, anzeigen;
einen Positionsinformationsbestimmungsabschnitt (207), der zum Bestimmen, ob die Verbindungszieleinheit zum selben LAN gehört, durch Bezugnahme auf die aufgenommenen Positionsinformationen ausgelegt ist;
einen Positionsinformationskonversionsabschnitt (209), der zum Konvertieren der aufgenommenen Positionsinformationen in Positionsinformationen ausgelegt ist, die explizit eine Fernzugriffsverbindung entsprechend einem Bestimmungsergebnis des Positionsinformationsbestimmungsabschnitts angeben; und
einen Playbackinformationserfassungsabschnitt (205), der zum Erfassen von Playbackinformationen, die von der Verbindungszieleinheit zurückgespielt werden sollen, auf der Basis der Positionsinformationen ausgelegt ist, **dadurch gekennzeichnet, dass** die Verbindungszieleinheit durch eine Privatadresse mit einem Knoten verbunden ist, der zum selben LAN wie die Verbindungszieleinheit gehört, und einen eindeutigen Knotenidentifikator hat, und
wenn der Positionsinformationskonversionsabschnitt (209) die Positionsinformationen, die übertragen werden sollen, in die Positionsinformationen konvertiert, die explizit eine Fernzugriffsverbindung angeben, wobei die konvertierten Positionsinformationen Folgendes umfassen: einen Schemaidentifikator, der explizit die Fernzugriffsverbindung angibt, den Knotenidentifikator, der dem Knoten zugeordnet ist, mit dem die Verbindungszieleinheit verbunden ist, und die Privatadresse der Verbindungszieleinheit.

3. Informationsplaybackeinheit nach Anspruch 2, wobei
der Positionsinformationsbestimmungsabschnitt ferner bestimmt, ob die Positionsinformationen Positionsinformationen sind, die explizit eine Fernzugriffsverbindung angeben, und
ob die Positionsinformationen Positionsinformationen sind, die explizit eine Fernzugriffsverbindung angeben, ob der Positionsinformationskonversionsabschnitt es unterlässt, die Positionsinformationen zu konvertieren.

4. Informationsverarbeitungsverfahren zum Übertragen an eine weitere Informationsverarbeitungseinheit, welche mit einer Informationsverarbeitungseinheit verbunden ist, von Positionsinformationen, die eine Position einer Verbindungszieleinheit anzeigen, mit der die weitere Informationsverarbeitungseinheit verbunden werden soll, wobei das Verfahren die folgenden Schritte umfasst:
Bestimmen, ob die weitere Informationsverarbeitungseinheit und die Verbindungszieleinheit im selben LAN vorhanden sind, durch Bezugnahme auf die Positionsinformationen, bevor sie zur weiteren Informationsverarbeitungseinheit übertragen werden;
Konvertieren der Positionsinformationen, die übertragen werden sollen, in Positionsinformationen, die explizit eine Fernzugriffsverbindung entsprechend einem Bestimmungsergebnis zu den Positionsinformationen angeben; und
Übertragen von einem Element aus den Positionsinformationen und den Positionsinformationen, die explizit eine Fernzugriffsverbindung zur weiteren Informationsverarbeitungseinheit angeben,
wobei jede Einheit aus der weiteren Informationsverarbeitungseinheit und der Verbindungszieleinheit durch eine Privatadresse mit einem Knoten verbunden ist, der zum selben LAN gehört wie eine entsprechende Einheit aus der weiteren Informationsverarbeitungseinheit und der Verbindungszieleinheit, und einen eindeutigen Knotenidentifikator hat, und
wobei bei der Konvertierung Positionsinformationen, die übertragen werden sollen, in Positionsinformationen, die explizit eine Fernzugriffsverbindung angeben, die konvertierten Positionsinformationen Folgendes umfassen: einen Schemaidentifikator, der explizit eine Fernzugriffsverbindung angibt; den eindeutigen Knotenidentifikator, der dem Knoten zugeordnet ist, mit dem eine Einheit aus der weiteren Informationsverarbeitungseinheit und der Verbindungszieleinheit verbunden ist; und die Privatadresse von einer Einheit aus der weiteren Informationsverarbeitungseinheit und Verbindungszieleinheit.

5. Informationsplaybackverfahren, das die folgenden Schritte umfasst:
Empfangen von Positionsinformationen, die eine Position einer Verbindungszieleinheit, mit der eine Verbindung hergestellt werden soll, anzeigen;
Bestimmen, ob die Verbindungszieleinheit zum selben LAN gehört, durch Bezugnahme auf die aufgenommenen Positionsinformationen;
Konvertieren der aufgenommenen Positionsinformationen in Positionsinformationen, die explizit eine Fernzugriffsverbindung entsprechend einem Bestimmungsergebnis zu den Positionsinformationen angeben; und
Erfassen von Playbackinformationen, die von der Verbindungszieleinheit zurückgespielt werden sollen, auf der Basis der Positionsinformationen, **dadurch gekennzeichnet, dass** die Verbindungszieleinheit durch eine Privatadresse mit einem Knoten verbunden ist, der zum selben LAN gehört wie die Verbindungszieleinheit, und einen eindeutigen Knotenidentifikator hat, und dadurch, dass beim Konvertieren der Positionsinformationen, die übertragen werden sollen, in Positionsinformationen, die explizit eine Fernzugriffsverbindung angeben, die konvertierten Positionsinformationen Folgendes umfassen: einen Schemaidentifikator, der explizit eine Fernzugriffsverbindung angibt; den Knotenidentifikator, der dem Knoten zugeordnet ist, mit dem die Verbindungszieleinheit verbunden ist; und die Privatadresse der Verbindungszieleinheit.

6. Computerprogramm, das computerlesbare Anweisungen enthält, die nach Laden in einen Computer den Computer so konfigurieren, dass er ein Verfahren nach Anspruch 4 oder 5 ausführt.

7. Informationsverarbeitungssystem, das eine Informationsverarbeitungseinheit nach Anspruch 1 umfasst, das mit einer Informationsplaybackeinheit nach Anspruch 2 über ein Netz verbunden ist.

## Revendications

1. Unité de traitement d'informations (10) comprenant :
une section de transmission d'informations d'emplacement (107) conçue pour transmettre, à une autre unité de traitement d'informations connectée à l'unité de traitement d'informations, des informations d'emplacement indiquant un emplacement d'une unité cible de connexion à laquelle l'autre unité de traitement d'informations doit être connectée ;
une section de détermination d'informations d'emplacement (109) conçue pour déterminer si l'autre unité de traitement d'informations et l'unité cible de connexion existent dans le même LAN en se référant aux informations d'emplacement avant leur transmission ; et
une section de conversion d'informations d'emplacement (111) conçue pour convertir les informations d'emplacement à transmettre en informations d'emplacement spécifiant explicitement une connexion d'accès distant selon un résultat de détermination de la section de détermination d'informations d'emplacement,
**caractérisée en ce que** chacune de l'autre unité de traitement d'informations et de l'unité cible de connexion est connectée par une adresse privée à un noeud appartenant au même LAN comme une unité correspondante parmi l'autre unité de traitement d'informations et l'unité cible de connexion et ayant un identifiant de noeud unique, et
lorsque la section de conversion d'informations d'emplacement (111) convertit les informations d'emplacement à transmettre en lesdites informations d'emplacement spécifiant explicitement une connexion d'accès distant, les informations d'emplacement converties comprenant : un identifiant de schéma spécifiant explicitement la connexion d'accès distant ; l'identifiant de noeud unique affecté au noeud auquel une unité parmi l'autre unité de traitement d'informations et l'unité cible de connexion est connectée ; et l'adresse privée d'une unité parmi l'autre unité de traitement d'informations et l'unité cible de connexion.

2. Unité de lecture d'informations (20) comprenant :
une section de réception d'informations d'emplacement (201) conçue pour recevoir des informations d'emplacement indiquant un emplacement d'une unité cible de connexion devant être connectée ;
une section de détermination d'informations d'emplacement (207) conçue pour déterminer si l'unité cible de connexion appartient au même LAN en se référant aux informations d'emplacement reçues ;
une section de conversion d'informations d'emplacement (209) conçue pour convertir les informations d'emplacement reçues en informations d'emplacement spécifiant explicitement une connexion d'accès distant selon un résultat de détermination de la section de détermination d'informations d'emplacement ; et
une section d'acquisition d'informations de lecture (205) conçue pour acquérir des informations de lecture à lire à partir de l'unité cible de connexion en fonction des informations d'emplacement, **caractérisée en ce que** l'unité cible de connexion est connectée par une adresse privée à un noeud appartenant au même LAN comme l'unité cible de connexion et ayant un identifiant de noeud unique, et
lorsque la section de conversion d'informations d'emplacement (209) convertit les informations d'emplacement à transmettre en lesdites informations d'emplacement spécifiant explicitement une connexion d'accès distant, les informations d'emplacement converties comprenant : un identifiant de schéma spécifiant explicitement la connexion d'accès distant, l'identifiant de noeud affecté au noeud auquel l'unité cible de connexion est connectée, et l'adresse privée de l'unité cible de connexion.

3. Unité de lecture d'informations selon la revendication 2 :
la section de détermination d'informations d'emplacement déterminant en outre si les informations d'emplacement sont des informations d'emplacement spécifiant explicitement une connexion d'accès distant, et
si les informations d'emplacement sont des informations d'emplacement spécifiant explicitement une connexion d'accès distant, la section de conversion d'informations d'emplacement s'abstenant de convertir les informations d'emplacement.

4. Procédé de traitement d'informations permettant de transmettre, à une autre unité de traitement d'informations connectée à une unité de traitement d'informations, des informations d'emplacement indiquant un emplacement d'une unité cible de connexion à laquelle l'autre unité de traitement d'informations doit être connectée, le procédé comprenant les étapes suivantes :
déterminer si l'autre unité de traitement d'informations et l'unité cible de connexion existent dans le même LAN en se référant aux informations d'emplacement avant leur transmission à l'autre unité de traitement d'informations ;
convertir les informations d'emplacement à transmettre en informations d'emplacement spécifiant explicitement une connexion d'accès distant selon un résultat de détermination concernant les informations d'emplacement ; et
transmettre un élément parmi les informations d'emplacement et les informations d'emplacement spécifiant explicitement une connexion d'accès distant à l'autre unité de traitement d'informations,
chacune de l'autre unité de traitement d'informations et de l'unité cible de connexion étant connectée par une adresse privée à un noeud appartenant au même LAN comme une unité correspondante parmi l'autre unité de traitement d'informations et l'unité cible de connexion et ayant un identifiant de noeud unique et
lors de la conversion des informations d'emplacement à transmettre en informations d'emplacement spécifiant explicitement une connexion d'accès distant, les informations d'emplacement converties comprenant : un identifiant de schéma spécifiant explicitement une connexion d'accès distant ; l'identifiant de noeud unique affecté au noeud auquel une unité parmi l'autre unité de traitement d'informations et l'unité cible de connexion est connectée ; et l'adresse privée d'une unité parmi l'autre unité de traitement d'informations et l'unité cible de connexion.

5. Procédé de lecture d'informations comprenant les étapes suivantes :
recevoir des informations d'emplacement indiquant un emplacement d'une unité cible de connexion devant être connectée ;
déterminer si l'unité cible de connexion appartient au même LAN en se référant aux informations d'emplacement reçues ;
convertir les informations d'emplacement reçues en informations d'emplacement spécifiant explicitement une connexion d'accès distant selon un résultat de détermination concernant les informations d'emplacement ; et
acquérir des informations de lecture à lire à partir de l'unité cible de connexion en fonction des informations d'emplacement, **caractérisé en ce que** l'unité cible de connexion est connectée par une adresse privée à un noeud appartenant au même LAN que l'unité cible de connexion et ayant un identifiant de noeud unique et **en ce que**, lors de la conversion des informations d'emplacement à transmettre en informations d'emplacement spécifiant explicitement une connexion d'accès distant, les informations d'emplacement converties comprennent : un identifiant de schéma spécifiant explicitement une connexion d'accès distant ; l'identifiant de noeud affecté au noeud auquel l'unité cible de connexion est connectée ; et l'adresse privée de l'unité cible de connexion.

6. Programme informatique contenant des instructions lisibles par ordinateur qui, lorsqu'elles sont chargées sur un ordinateur, amènent l'ordinateur à exécuter un procédé selon l'une des revendications 4 ou 5.

7. Système de traitement d'informations comprenant une unité de traitement d'informations selon la revendication 1, couplée à une unité de lecture d'informations selon la revendication 2, sur un réseau.
